# EUROPEAN PATENT APPLICATION

(11) **EP 2 164 253 A2**
(43) Date of publication of application: **17.03.2010**
(21) Application number: 09156269.4
(22) Date of filing: 26.03.2009
(51) Int. Cl.: H04N 5/50

(54) **Broadcast receiving apparatus and control method thereof**

(30) Priority: 16.09.2008 KR 20080090669
(71) Applicant: Samsung Electronics Co., Ltd., Seoul 442-742 (KR)
(72) Inventor: CHANG, Hye-young, Suwon-si, Gyeonggi-do (KR)
(74) Representative: Brandon, Paul Laurence

(57) **Abstract**

A broadcast receiving apparatus and a control method thereof are provided. The broadcast receiving apparatus includes: a signal receiving unit which receives a broadcast signal including different video qualities with respect to the same broadcast content; a user selection unit for a channel selection; and a channel control unit which determines the video quality of a broadcast signal received through a channel selected by the user selecting unit, searches for a corresponding channel through which a broadcast signal of higher video quality with respect to the broadcast content of the received broadcast signal is received, and converts the selected channel to the found corresponding channel. Thus, a broadcast signal having good quality is received.

## Description

### BACKGROUND OF THE INVENTION

### Field of the Invention

Apparatus and methods consistent with the present invention relate to broadcast receiving apparatus and control methods thereof, and more particularly, to broadcast receiving apparatus capable of receiving broadcast signals having different video qualities.

### Description of the Related Art

As digital broadcasting has been prevailing, a broadcasting station sends broadcast signals having different video qualities adaptive to the technical grade of a video. A video quality of the broadcast signal is generally determined by the number of pixels as a unit configuring a picture, and is classified into a high definition (HD) having resolution of 1950 x 1080 pixels, and a standard definition (SD) having lower resolution than the HD.

Recently, the digital broadcasts have been transmitted by a digital cable broadcasting, a digital satellite broadcasting, a digital ground wave broadcasting and so on, and the number of channels through which a user is capable of viewing the broadcast has increased to more than 100. Further, a tendency shows that the number of channels will continuously increase.

Where an HD broadcast signal and an SD broadcast signal with respect to the same content are concurrently received, it is difficult for a user to select either of the broadcast signals adaptive to the video quality if the user has no correct channel information. Also, there is a great number of channels as described above, and thus, a user can select a channel that receives the HD broadcast signal only after having switched between a number of channels.

### SUMMARY OF THE INVENTION

Accordingly, it is an aim of preferred embodiments of the present invention to provide a broadcast receiving apparatus capable of receiving a broadcast signal having good quality, and a control method thereof.

Another aim of preferred embodiments of the present invention is to provide a broadcast receiving apparatus capable of using channel information to search the video quality of a broadcast signal, and linking a selected channel by a user to other channel adaptive to the video quality, and a control method thereof.

The present invention provides a broadcast receiving apparatus, including: a signal receiving unit which receives broadcast signals including different video qualities with respect to the same broadcast content; a user selection unit for a channel selection; and a channel control unit which determines the video quality of a broadcast signal received through a channel selected by the user selection unit, searches for a corresponding channel through which a broadcast signal of a higher video quality is received, and converts the selected channel to the found corresponding channel, with respect to the broadcasting content of the received broadcast signal.

The video quality of the broadcast signal may include a high definition (HD) and a standard definition (SD), and an HD broadcast signal may be received through the corresponding channel.

The channel control unit may link the channel through which an SD broadcast signal is received, and the corresponding channel through which the HD broadcast signal is received with respect to the same broadcast contents in an automatic channel searching.

The channel control unit may link a channel through which an SD broadcast signal is received, and the corresponding channel through which the HD broadcast signal is received with respect to the same broadcast contents by a predetermined period.

The broadcast signal may include channel information with respect to a broadcast contents, and the channel control unit may link the channel through which the SD broadcast signal is received, and the corresponding channel through which the HD broadcast signal is received with respect to the same broadcast contents by the channel information.

The channel information may include a system information (SI) including an HD descriptor and an SD descriptor providing a channel number with respect to the broadcast signal, different channel numbers may be provided in the HD descriptor and the SD descriptor, corresponding to the SD broadcast signal with respect to a single broadcast contents, and the channel control unit may search the corresponding channel including the same channel number as the channel number in the SD descriptor with respect to the SD broadcast signal in the HD descriptor, and link a channel in the HD descriptor with respect to the SD broadcast signal to the found corresponding channel.

The broadcast receiving apparatus may further include a display unit which displays the broadcast signal received through the selected channel.

The present invention provides a control method of a broadcast receiving apparatus which receives broadcast signals including different video qualities with respect to the same broadcast contents, the control method of the broadcast receiving apparatus including: receiving a channel selecting signal; determining the video quality of a broadcast signal received through a selected channel, and searching for a corresponding channel through which a broadcast signal of a higher video quality is received with respect to the broadcast contents of the received broadcast signal is received; and converting the selected channel to the found corresponding channel.

The video quality of the broadcast signal may include a high definition (HD) and a standard definition (SD), and if an SD broadcast signal is selected, the selected channel may be converted to the corresponding channel through which an HD broadcast signal is received.

The control method of the broadcast receiving apparatus may further include linking a channel through which an SD broadcast signal is received, and the corresponding channel through which the HD broadcast signal is received with respect to the same broadcast contents in an automatic channel searching.

The control method of the broadcast receiving apparatus may further include linking a channel through which an SD broadcast signal is received, and the corresponding channel through which the HD broadcast signal is received with respect to the same broadcast contents by a predetermined period.

The broadcast signal may include a channel information with respect to a broadcast contents, and the searching for the corresponding channel may include linking the channel through which the SD broadcast signal is received, and the corresponding channel through which the HD broadcast signal is received with respect to the same broadcast contents by the channel information.

The channel information may include system information (SI) including an HD descriptor and an SD descriptor informing a channel number with respect to the broadcast signal, different channel numbers may be provided in the HD descriptor and the SD descriptor to correspond to the SD broadcast signal with respect to a single broadcast contents, and the searching for the corresponding channel may include searching for the corresponding channel including the same channel number as the channel number in the SD descriptor with respect to the SD broadcast signal in the HD descriptor, and linking a channel in the HD descriptor with respect to the SD broadcast signal to the found corresponding channel.

The control method of the broadcast receiving apparatus may further include displaying a broadcast signal received through the corresponding channel.

### BRIEF DESCRIPTION OF THE DRAWINGS

The present invention will become apparent and more readily appreciated from the following description of the exemplary embodiments, taken in conjunction with the accompanying drawings, in which:
FIG. 1 is a control block diagram of a broadcast receiving apparatus according to an exemplary embodiment of the present invention;
FIG. 2 is a control flowchart illustrating a control method of the broadcast receiving apparatus in FIG. 1;
FIG. 3 is a control flowchart illustrating a control method of a broadcast receiving apparatus according to another exemplary embodiment of the present invention;
FIG. 4 is a schematic view illustrating channel information describing a channel linking of the broadcast receiving apparatus in FIG. 3; and
FIG. 5 is a control block diagram of a broadcast receiving apparatus according to another exemplary embodiment of the present invention.

### DETAILED DESCRIPTION OF EXEMPLARY EMBODIMENTS

Reference will now be made in detail to the embodiments of the present invention, examples of which are illustrated in the accompanying drawings, wherein like reference numerals refer to like elements throughout. The exemplary embodiments are described below so as to explain the present invention by referring to the figures. Repetitive description with respect to like elements of different embodiments may be omitted for the convenience of clarity.

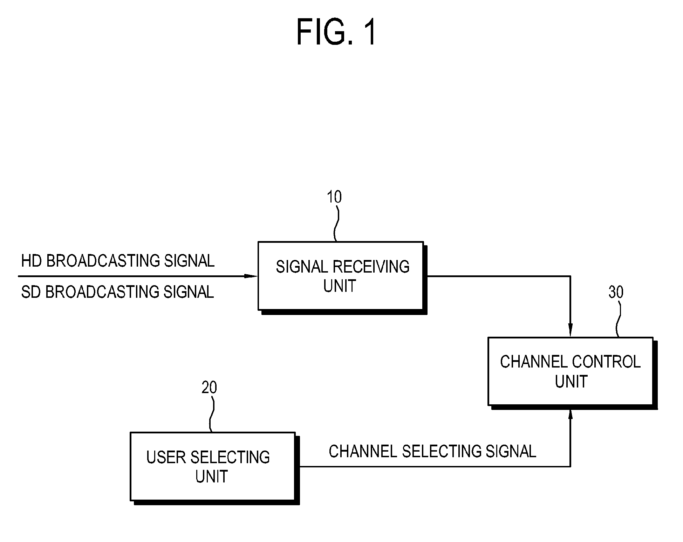

FIG. 1 is a control block diagram of a broadcast receiving apparatus according to an exemplary embodiment of the present invention.

As shown in FIG. 1, the broadcast receiving apparatus includes a signal receiving unit 10 capable of receiving broadcasting signals of different picture qualities, a user selection unit 20 for selecting a channel, and a channel control unit 30 controlling the signal receiving unit 10. The signal receiving unit 10 may be implemented as a set top box.

The signal receiving unit 10 may include an antenna, a wire cable, a tuner, etc., which are capable of receiving broadcast signals. In an era of digital broadcasting, a broadcasting station can send broadcast signals having different video qualities adaptively to a technical grade of a picture. The video quality of the broadcast signal is generally determined by the number of pixels as a unit configuring a picture, and classified into a high definition (HD) having resolution of 1950 x 1080 pixels and a standard definition (SD) having lower resolution than the HD. Hereinafter, a broadcast signal transmitted for an HD grade is defined as an HD broadcast signal. The broadcasting station may send a HD broadcast signal and an SD broadcast signal for the same broadcasting content, and the signal receiving unit 10 according to the present exemplary embodiment may receive both of the HD broadcast signal and the SD broadcast signal.

The user selection unit 20 may refer to a user interface for selecting a channel, and correspond to all of the known input devices such as a remote control unit, or a channel selection button and a touch panel provided in a housing of the broadcast receiving apparatus. The user selection unit 20 may include a direction key for selecting a channel in order, and a number key for inputting a specific channel number.

The channel control unit 30 determines a video quality of a broadcasting signal received by a selected channel, and searches for a channel through which a broadcast signal having a higher video quality with respect to the broadcasting content of the received broadcast signal is received. Hereinafter, with respect to an arbitrary channel through which an SD broadcast signal is received, a channel receiving a HD broadcast signal for the same content as broadcasting content received through the arbitary channel will be defined as a corresponding channel. The HD broadcast signal received through the corresponding channel has a higher video quality than the SD broadcast signal received through the arbitrary channel. For example, if a channel receiving SD-graded broadcast content which a broadcasting station A sends is numbered 5, and a channel receiving HD-graded broadcast content is numbered 100, the channel numbered 100 becomes a corresponding channel to the channel numbered 5. If a corresponding channel to a channel which a user selects is searched, the channel control unit 30 controls the signal receiving unit 10 to tune the corresponding channel to thereby receive the HD broadcast signal.

In brief, the broadcasting station A sends broadcast signals with a plurality of video quality grades with respect to a single broadcast content, and the channel control unit 30 determines the video qualities of the broadcast signals, and if there is a corresponding channel, tunes the corresponding channel to receive an HD broadcast signal.

The channel control unit 30 may employ various methods for determining the video quality of a broadcast signal, searching for a corresponding channel, and converting a selected channel to the corresponding channel. The channel control unit 30 may decode a broadcast signal to obtain resolution information, or may use information on various data which a broadcast station sends, to search for a corresponding channel.

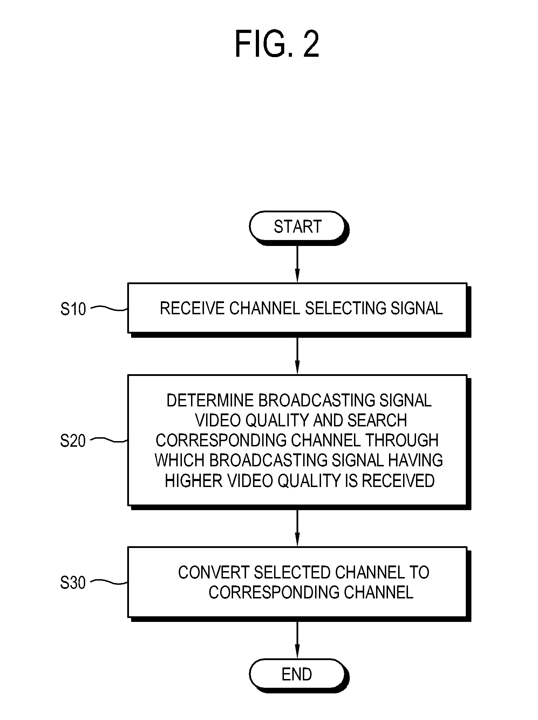

FIG. 2 is a control flowchart illustrating a control method of the broadcast receiving apparatus in FIG. 1. The broadcast receiving apparatus according to the present exemplary embodiment can receive an SD broadcast signal and an HD broadcast signal of different video qualities, with respect to the same broadcasting content.

The broadcast receiving apparatus first receives a channel selecting signal generated through the user selection unit 20 (S10).

The channel control unit 30 determines the video quality of a broadcast signal received through a selected channel, and searches for a corresponding channel through which a broadcast signal having a higher video quality, with respect to the broadcast content of the received broadcast signal, is received (S20). If such a corresponding channel is not found, the signal receiving unit 10 receives a broadcast signal through a channel selected by a user.

If such a corresponding channel is found, the channel control unit 30 converts the channel selected by the user to the found corresponding channel (S30). An HD broadcast signal is received through the corresponding channel.

In case of a digital broadcasting having a lot of channels, if there is no correct information about the channels, a user may perform a plurality of operations to search for a channel through which a broadcast signal wanted by the user is received. Further, regardless of the channel information, the user may be able to select a wanted channel only if the user has known about the HD broadcast signal and the SD broadcast signal. However, according to the present exemplary embodiment, the broadcast receiving apparatus can automatically receive the HD broadcast signal even though the user does not perform channel switching or corresponding channel setting, for receiving the HD broadcast signal. That is, the user can conveniently and easily receive a broadcast signal of a higher video quality.

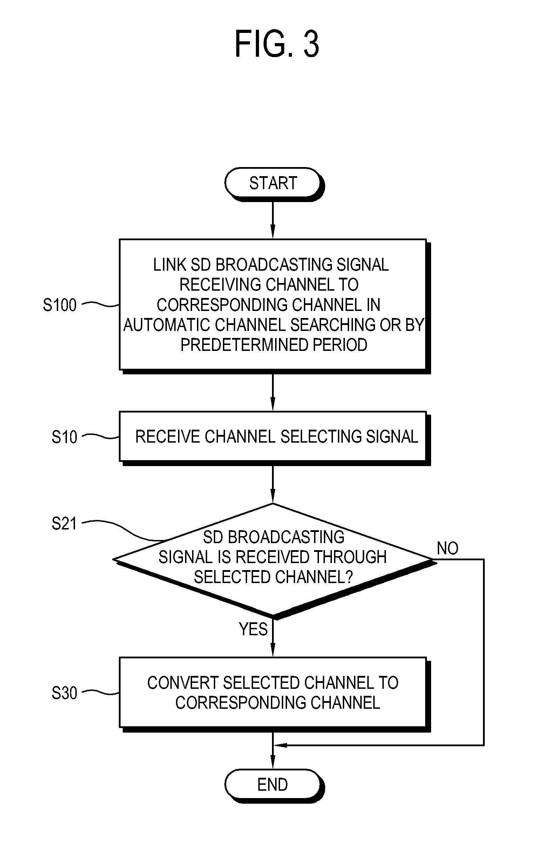

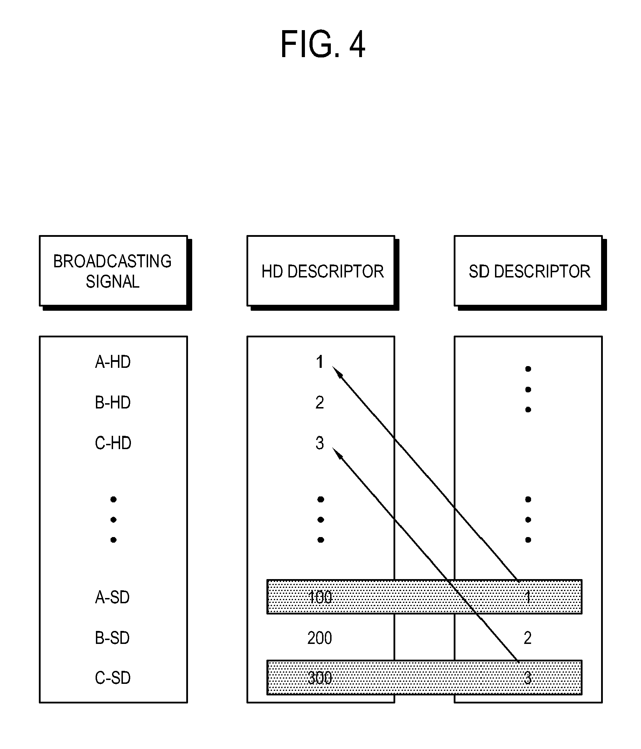

FIG. 3 is a control flowchart illustrating a control method of a broadcast receiving apparatus according to another exemplary embodiment of the present invention, and FIG. 4 is a schematic view illustrating channel information for describing a channel linking of the broadcast receiving apparatus according to the present exemplary embodiment.

As shown in FIG. 3, a broadcast receiving apparatus first links a channel through which an SD broadcast signal is received to a corresponding channel through which an HD broadcast signal is received, in an automatic channel searching process or by a predetermined method (S100). Of course, the broadcast signals received through the linked channels are directed to the same content. The automatic channel searching means that all channels are tuned to search for a channel through which a broadcast signal is received, and is typically performed by a signal receiving unit 10 when the broadcast receiving apparatus is initially used.

The broadcast signal includes information about various broadcasts in addition to broadcast content, and the broadcast receiving apparatus seeks a channel based on the broadcast information and displays the broadcast signal. The broadcast information includes program specific information (PSI) and system information (SI). The SI includes an HD descriptor and an SD descriptor each providing a channel number with respect to the broadcast signal as the channel information. A broadcasting station sends the HD descriptor providing the channel information about an HD broadcast signal, and the SD descriptor providing the channel information about an SD broadcast signal, and the broadcast receiving apparatus seeks a channel specific to either of them. The broadcast receiving apparatus according to the present exemplary embodiment seeks a channel adaptive to the HD descriptor. If the broadcast receiving apparatus is incapable of receiving the HD broadcast signal, a channel adaptive to the SD descriptor may be sought.

The channel control unit 30 uses the channel information included in the SI to confirm that the SD broadcast signal and the HD broadcast signal with respect to the same broadcast content are received, and searches for a corresponding channel so as link a channel which a user selects to the corresponding channel.

As shown in FIG. 4, the broadcast content A which a specific broadcasting station sends is produced in an HD broadcast signal and an SD broadcast signal. The broadcast contents B and C which another broadcasting station different from the specific broadcasting station sends are produced in broadcast signals of different video qualities to be sent.

In an HD descriptor, the channel number of the HD broadcast signal with respect to the broadcasting content A is allotted "1," and the channel number of the SD broadcast signal with respect to the same broadcast content A is allotted "100." If a user selects the channel numbered "1," the signal receiving unit 10 receives the HD broadcast signal. If the user selects the channel numbered "100," the signal receiving unit 10 receives the SD broadcast signal with respect to the same broadcast content A.

In an SD descriptor, the channel number of the SD broadcast signal with respect to the broadcast contents A is allotted "1.". That is, the channel numbers in the HD descriptor and the SD descriptor with respect to a single SD broadcast are different. On the other hand, with respect to a single broadcast content, the channel number allotted to the HD broadcast signal on the HD descriptor and the channel number allotted to the SD broadcast signal on the SD descriptor are the same. That is, with respect to the broadcast content A, the channel number allotted to the HD broadcast signal on the HD descriptor is "1," and the channel number allotted to the SD broadcast signal on the SD descriptor provided is also "1."

The channel control unit 30 may search for a corresponding channel with respect to the SD broadcast signal by finding out the channel to which the same channel number is allotted on the SD descriptor and the HD descriptor.

For example, the broadcast content B received through a channel "200" is allotted to the channel number "2" on the SD descriptor. If the channel numbered "2" on the SD descriptor exists on the HD descriptor, this means that a corresponding channel receiving the HD broadcast signal with respect to the broadcast content B exists. The channel control unit 30 finds out a corresponding channel and links the channel "200" through which the SD broadcast signal B is received to the corresponding channel "2." As shown therein, the channel "100" is linked to the corresponding channel "1," the channel "200" is linked to the corresponding channel "2," and the channel "300" is linked to the corresponding channel "3."

In brief, if channel numbers are allotted to both of the HD descriptor and the SD descriptor with respect to the broadcast content received by the SD broadcast signal, the channel control unit 30 searches whether the channel number on the SD descriptor exists on the HD descriptor. If a channel allotted the same channel number exists on the HD descriptor, the channel control unit 30 determines the searched channel as the corresponding channel.

The channel information received through the HD descriptor and the SD descriptor may be changed. In this regard, the channel control unit 30 may perform an operation for linking the corresponding channel according to a predetermined period to reflect the changed channel information to the channel link.

Referring back to FIG. 3 again, the broadcast receiving apparatus linking a SD broadcast signal receiving channel to the corresponding channel receives a channel selecting signal from a user (S10).

Then, it is determined whether the SD broadcast signal is received by the selected channel or not (S21). The received broadcast signal is determined to be the SD broadcast signal by using channel information obtained by parsing the broadcast signal.

If the received broadcast signal is not the SD broadcast signal, that is, if the user selects the channel 1, 2 or 3 to receive the HD broadcast signal, the broadcast signal is received adaptively to the selected channel.

On the other hand, if the received broadcast signal is the SD broadcast signal, the channel control unit 30 converts the selected channel to the linked corresponding channel (S30). For example, if the user selects the channel "100," the channel control unit 30 converts it to the channel "1" to receive the HD broadcast signal, whereby the user can receive the HD broadcast signal having a higher video quality although the SD broadcasting signal has been selected.

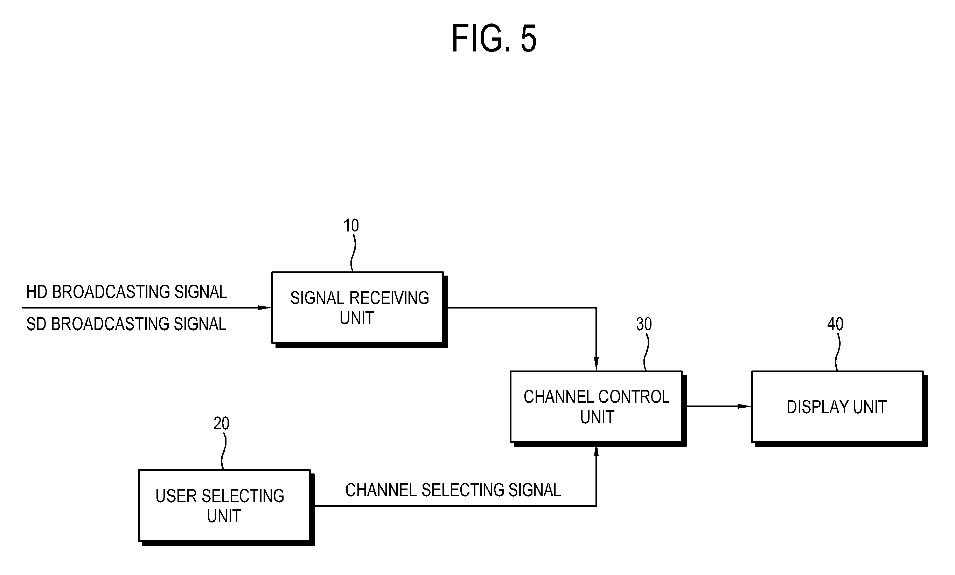

FIG. 5 is a control block diagram of a broadcast receiving apparatus according to another exemplary embodiment of the present invention.

As shown in FIG. 5, the broadcast receiving apparatus according to the present exemplary embodiment further includes a display unit 40, in addition to a signal receiving unit 10, a user selection unit 20 and a channel control unit 30. The broadcast receiving apparatus including the display unit 40 may be implemented as a television, or may be configured with a monitor, etc. connected to a set top box.

The display unit 40 displays a broadcast signal received through a selected channel. The broadcast receiving apparatus further includes a signal processing unit (not shown) processing video and audio signals to display the broadcast signal on the display unit 40.

Typically, if a user selects a channel, the channel number is displayed on the display unit 40 for a predetermined time. If an SD broadcast signal is received through the channel which the user selects, the broadcast receiving apparatus processes and displays an HD broadcast signal received through a corresponding channel linked to the selected channel, with maintaining the selected channel number as displayed. That is, the user can view the HD broadcast signal on the existing channel number without perceiving a change in the channel.

Alternatively, the broadcast receiving apparatus may supply a user with a user interface (UI) indicating that a broadcast signal received through a channel is changed from the SD broadcast signal to the HD broadcast signal.

Also, a user may be known that a broadcast signal received through a selected channel is the SD broadcast signal, and may be provided information on a corresponding channel capable of receiving an HD broadcast signal with respect to the same broadcast content. Also, a UI such as a channel conversion selecting window may be displayed on the display unit 40 so as to allow a user to select a channel link.

As described above, in the broadcast receiving apparatus capable of receiving the SD broadcast signal and the HD broadcast signal simultaneously, the selected channel is converted to a channel through which the HD broadcast signal is received, thereby supplying a user with a broadcast signal of good quality.

As described above, preferred embodiments of the present invention provide a broadcast receiving apparatus capable of receiving a broadcast signal having good quality, and a control method thereof.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast receiving apparatus, comprising:
a signal receiving unit which receives broadcast signals of different video qualities with respect to the same broadcast content;
a user selection unit for selecting a channel; and
a channel control unit which determines the video quality of a broadcast signal received through a channel selected by the user selection unit, searches for a corresponding channel through which a broadcast signal of a higher video quality is received, and converts the selected channel to the found corresponding channel, with respect to the broadcast content of the received broadcast signal.

2. The broadcast receiving apparatus according to claim 1, wherein the video quality of the broadcast signal comprises a high definition (HD) and a standard definition (SD), and
an HD broadcast signal is received through the corresponding channel.

3. The broadcast receiving apparatus according to claim 2, wherein the channel control unit links a channel through which an SD broadcast signal is received, and the corresponding channel through which the HD broadcast signal is received, with respect to the same broadcast content in an automatic channel searching.

4. The broadcast receiving apparatus according to claim 2, wherein the channel control unit links, by a predetermined period, the channel through which an SD broadcast signal is received, and the corresponding channel through which the HD broadcast signal is received, with respect to the same broadcast content.

5. The broadcast receiving apparatus according to claims 3 or 4, wherein the broadcast signal comprises channel information with respect to broadcast content, and
the channel control unit links, by using the channel information, the channel through which the SD broadcast signal is received, and the corresponding channel through which the HD broadcast signal is received, with respect to the same broadcast content.

6. The broadcast receiving apparatus according to claim 5, wherein the channel information comprises system information (SI) comprising an HD descriptor and an SD descriptor, providing channel numbers with respect to the broadcast signal,
different channel numbers are provided in the HD descriptor and the SD descriptor, corresponding to the SD broadcast signal with respect to a single broadcast content, and
the channel control unit searches for the corresponding channel comprising the same channel number as the channel number in the SD descriptor with respect to the SD broadcast signal in the HD descriptor, and links a channel in the HD descriptor with respect to the SD broadcast signal to the found corresponding channel.

7. The broadcast receiving apparatus according to claim 1, further comprising a display unit which displays the broadcast signal received through the selected channel.

8. A control method of a broadcast receiving apparatus which receives broadcast signals of different video qualities with respect to the same broadcast content, the control method comprising:
receiving a channel selecting signal;
determining the video quality of a broadcast signal received through a selected channel, and searching for a corresponding channel through which a broadcast signal of a higher video quality is received with respect to the broadcasting content of the received broadcasting signal; and
converting the selected channel to the found corresponding channel.

9. The control method according to claim 8, wherein the video quality of the broadcast signal comprises a high definition (HD) and a standard definition (SD), and
if an SD broadcast signal is selected, the selected channel is converted to the corresponding channel through which an HD broadcast signal is received.

10. The control method according to claim 9, further comprising linking, in an automatic channel searching, a channel through which an SD broadcast signal is received, and the corresponding channel through which the HD broadcast signal is received, with respect to the same broadcast content.

11. The control method according to claim 9, further comprising linking, by a predetermined period, a channel through which an SD broadcast signal is received, and the corresponding channel through which the HD broadcast signal is received with respect to the same broadcast content.

12. The control method according to claims 10 or 11, wherein the broadcast signal comprises channel information with respect to a broadcast content, and
the searching the corresponding channel comprises linking, by the channel information, the channel through which the SD broadcast signal is received, and the corresponding channel through which the HD broadcast signal is received, with respect to the same broadcast contents.

13. The control method according to claim 12, wherein the channel information comprises system information (SI) comprising an HD descriptor and an SD descriptor informing a channel number with respect to the broadcast signal,
different channel numbers are provided in the HD descriptor and the SD descriptor, corresponding to the SD broadcast signal with respect to a single broadcast content, and
the searching for the corresponding channel comprises searching for the corresponding channel comprising the same channel number as the channel number in the SD descriptor with respect to the SD broadcast signal in the HD descriptor, and linking a channel in the HD descriptor with respect to the SD broadcast signal to the found corresponding channel.

14. The control method according to claim 13, further comprising displaying a broadcast signal received through the corresponding channel.
